(19) Europäisches Patentamt
European Patent Office
Office européen des brevets

(11) EP 2 952 549 A1

(12) **EUROPEAN PATENT APPLICATION**
published in accordance with Art. 153(4) EPC

(43) Date of publication:
**09.12.2015 Bulletin 2015/50**

(21) Application number: **14746736.9**

(22) Date of filing: **31.01.2014**

(51) Int Cl.:
***C09D 163/00*** *(2006.01)* ***C09D 7/12*** *(2006.01)*
***C09D 183/06*** *(2006.01)* ***G02B 1/10*** *(2015.01)*

(86) International application number:
**PCT/JP2014/052283**

(87) International publication number:
**WO 2014/119736 (07.08.2014 Gazette 2014/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.01.2013 JP 2013016573**

(71) Applicant: **EHS Lens Philippines, Inc.**
**Cavite (PH)**

(72) Inventor: **HOSHINO, Yuta**
**Tokyo 161-8525 (JP)**

(74) Representative: **Adam, Holger**
**Kraus & Weisert**
**Patentanwälte PartGmbB**
**Thomas-Wimmer-Ring 15**
**80539 München (DE)**

(54) **COATING COMPOSITION, AND METHOD FOR PRODUCING OPTICAL ARTICLE**

(57) An aspect of the present invention relates to a coating composition, which comprises an epoxy group-containing compound, acetylacetonate with iron as a central metal, and acetylacetonate with aluminum as a central metal, wherein the ratio mF of the number of moles of the acetylacetonate with iron as a central metal to the number of moles of epoxy group contained in the epoxy group-containing compound, and the ratio mA of the number of moles of the acetylacetonate with aluminum as a central metal to the number of moles of epoxy group contained in the epoxy group-containing compound satisfy the following conditions:

$$0.000 < mF/mA \leq 1.000$$

$$0.0064 \leq (mF+mA) \leq 0.0253.$$

EP 2 952 549 A1

## Description

This application claims the benefit of priority to Japanese Patent Application No. 2013-016573 filed on January 31, 2013, which is expressly incorporated herein by reference in its entirety.

Technical field

The present invention relates to a coating composition and to a method of manufacturing an optical article.

Background art

Reference 1 (Japanese Unexamined Patent Publication (KOKAI) No. 2006-008869, which is expressly incorporated herein by reference in its entirety) describes a coating composition comprising: an antimony pentoxide sol; a silicon compound in the form of a compound of the formula $(R^IR^{II}_aSi(OR^{III})_{3-a}$ and X $(SiR^V_b(OR^{VI})_{3-b})_2)$, or a partial hydrolysate thereof; an epoxy group-containing silicon compound or a partial hydrolysate thereof; an organic solvent; and an acetylacetonate complex of iron, nickel, or the like.

In lenses employed as substrates in eyeglasses and sunglasses, optical disks, optical elements, and other optical articles, a coating is sometimes formed to increase the hardness of the surface and enhance resistance to scratching and/or abrasion. In optical articles where it is desirable to control coloration such as eyeglass lenses and the like, a coating composition with high scratch resistance and little coloration is desirable.

One aspect of the present invention relates to a coating composition comprising an epoxy group-containing compound, acetylacetonate with iron as a central metal, and acetylacetonate with aluminum as a central metal. In the above coating composition, the ratio mF of the number of moles of the acetylacetonate with iron as the central metal to the number of moles of epoxy group contained in the epoxy group-containing compound, and the ratio mA of the number of moles of acetylacetonate with aluminum as the central metal to the number of moles of epoxy group contained in the epoxy group-containing compound, satisfy the following conditions:

$$0.000 < mF/mA \leq 1.000 \qquad \ldots (1)$$

$$0.064 \leq (mF+mA) \leq 0.0253 \qquad \ldots (2).$$

The above coating composition comprises at least the two kinds of acetylacetonate having iron as the central metal and acetylacetonate having aluminum as the central metal. The acetylacetonate having iron as the central metal and the acetylacetonate having aluminum as the central metal can be thought of as functioning as curing catalysts (polymerization catalysts) that catalyze the ring-opening reaction of the epoxy group. Furthermore, having the molar ratio mF of the iron acetylacetonate to epoxy group(s) that is less than or equal to that of the molar ratio mA of the aluminum acetylacetonate can enhance the hardness of the optical article on which the coating composition is coated. Keeping the combined quantity of ratio mF and ratio mA to greater than or equal to 0.0064 and less than or equal to 0.0253 relative to the number of moles of epoxy groups can inhibit coloration, particularly yellowing, of the optical article on which the coating composition is coated.

In one embodiment, the molar ratio mF of the iron acetylacetonate and the molar ratio mA of the aluminum acetylacetonate satisfy the following conditions:

$$0.0009 \leq mF \leq 0.0032 \qquad \ldots (3)$$

$$0.0032 \leq mA \leq 0.0221 \qquad \ldots (4).$$

Satisfying the conditions (3) and (4) is desirable to more reliably inhibit yellowing when the coating composition is coated on the surface of an optical article and to more reliably enhance the resistance to scratching of the surface.

In one embodiment, the molar ratio mF of the iron acetylacetonate and the molar ratio mA of the aluminum acetylacetonate satisfy the following condition:

$$0.064 \leq (mF+mA) \leq 0.0190 \quad ... (5).$$

Satisfying the condition (5) is desirable from the perspective of further reducing yellowing when the coating composition is coated on the surface of an optical article.
In one embodiment, the molar ratio mF of the iron acetylacetonate and the molar ratio mA of the aluminum acetylacetonate satisfy the following condition:

$$0.1448 \leq mF/mA \leq 0.3368 \quad ... (6).$$

Satisfying the condition (6) is desirable from the perspective of increasing the resistance to scratching when the coating composition is coated on the surface of an optical article.
In one embodiment, the molar ratio mF of the iron acetylacetonate and the molar ratio mA of the aluminum acetylacetonate satisfy the following condition:

$$0.1746 \leq mF/mA \leq 0.3368 \quad ... (7).$$

Satisfying the condition (7) is desirable to achieve good scratch resistance and to effectively reduce yellowing when the coating composition is coated on the surface of an optical article.
One embodiment of the epoxy group-containing compound is an epoxy group-containing organic silicon compound, an example of which is an epoxy group-containing silane compound.
Another aspect of the present invention is the method of manufacturing an optical article comprising the following steps:

1. coating the above coating composition directly, or over another layer(s), on an optical substrate; and
2. baking the optical substrate on which the coating composition has been coated at a temperature ranging from 100°C to 150°C.

One aspect of the present invention can provide an optical article with little yellowing and with high resistance to scratching.

Brief description of the drawings

[Figure 1] A drawing showing the typical structure of an eyeglass lens.
[Figure 2] A drawing showing the results of evaluation of Examples and Comparative Examples.
[Figure 3] A drawing showing the distribution in evaluation by the steel wool test.
[Figure 4] A drawing showing the distribution in evaluation by the Bayer test.
[Figure 5] A drawing showing the distribution in overall evaluation of scratch resistance.
[Figure 6] A drawing showing the distribution in evaluation of yellowing.
[Figure 7] A drawing showing the distribution in the overall evaluation.

Modes for carrying out the invention

Figure 1 shows the typical structure of an eyeglass lens containing a plastic lens substrate as an example of an optical article. The eyeglass lens 1 is comprised of a lens substrate 2, primer layers 3 formed on a first surface 2a and a second surface 2b (also collectively referred to hereinafter as "the two surfaces 2a and 2a") of lens substrate 2, hard coat layers 10 formed on the surfaces of primer layers 3, antireflective layers 5 formed on the surfaces of hard coat layers 10, and antifouling layers 6 formed on the surfaces of antireflective layers 5.
Lens substrate 2 of lens 1 in the present example is of plastic, but can be of glass. The refractive index of lens substrate 2 is not specifically limited. Examples of plastic lens substrates are diethylene glycol bis(allyl carbonate) (CR-39); polycarbonates; or polythiourethane plastics manufactured by reacting a compound having an isocyanate or isothiocyanate group with a compound having a mercapto group.
Primer layer 3 is formed on the surface of lens substrate 2. Primer layer 3 can have the role of enhancing the

durability of the surface treatment films as a whole and of increasing adhesion to hard coat layer 10. Primer layer 3 can be omitted. It is sometimes left out on glass lenses. Specific examples of primer layer 3 are layers that are formed with a coating composition comprising an organic resin polymer with polarity and titanium oxide-containing metal oxide microparticles. Examples of organic resin polymers that can be employed are various resins such as polyester resins, polyurethane resins, epoxy resins, melamine resins, polyolefin resins, urethane acrylate resins, and epoxy acrylate resins.

Hard coat layer 10 can include functions such as enhancing the surface strength of lens 1 and the like. The hard coat layer 10 provided on lens 1 in the present example will be further described below.

Antireflective film 5, for example, has a refractive index that is lower than the refractive index of the hard coat layer by 0.10 or more and is comprised of one or more layers selected from the group consisting or organic layers and inorganic layers. Antireflective film 5 can be a single layer or multiple layers. Examples of materials of thin layers constituting inorganic antireflective films are $SiO_2$, SiO, $ZrO_2$, $TiO_2$, TiO, $Ti_2O_3$, $Ti_2O_5$, $Al_2O_3$, $Ta_2O_5$, $CeO_2$, MgO, $Y_2O_3$, $SnO_2$, $MgF_2$, and $WO_3$.

One example of an organic antireflective layer is formed of a composition comprising the organic silicon compound denoted by formula (11) below and fine silica particles:

$$R^1{}_iR^2{}_jSiX^1{}_{4-i-j} \cdots \qquad (11)$$

(wherein, in the above formula, $R^1$ denotes an organic group having a polymerizable reactive group, $R^2$ denotes a hydrocarbon group having 1 to 6 carbon atoms, $X^1$ denotes a hydrolysable group, at least either i or j denotes 1 and the other denotes 0 or 1).

Antifouling layer 6 is a layer the main purpose of which is to prevent water droplets and grime from adhering to the two surfaces of lens 1. That is, when an antireflective layer 5 is provided on the two surfaces 2a and 2b of lens 1, and an antifouling layer 6 is formed over antireflective layers 5 on the two surfaces 2a and 2b, it is possible to prevent the adhesion of water droplets and grime to the lens surfaces. Specifically, one type of coating agent for forming antifouling layer 6 is a coating agent comprising a fluorine-containing organic silicon compound with a molecular weight of about 500. Another type is obtained by conducting processing such as incorporating an ether bond into a fluorine-containing silicon compound to obtain a coating agent having a molecular weight that has been increased to about 2,000 to 10,000. Examples of coating agents of increased molecular weight are those containing the hydrolysis condensate of the perfluoropolyalkylene ether-modified silane described in Japanese Unexamined Patent Publication (KOKAI) No. 2004-145283, which is expressly incorporated herein by reference in its entirety, and those containing a mixture in the form of the silicon-containing organic fluorine-containing polymers described in Japanese Unexamined Patent Publication (KOKAI) Heisei No. 09-263728, which is expressly incorporated herein by reference in its entirety. Antifouling layer 6 can be omitted. Instead of antifouling layer 6, it is possible to provide a hydrophilic antifogging layer. In the present invention, the molecular weight refers to the average molecular weight, with regard to polymers. The average molecular weight is the number average molecular weight as measured by gel permeation chromatography (GPC) and converted to a polystyrene equivalent.

Coating composition for hard coat layer

In Examples and Comparative Examples set forth below, hard coat layer 10 was formed using the following coating composition. Hard coat layer coating composition Hc comprises components A and B below:

Component A: epoxy group-containing compound;
Component B: acetylacetonate with iron as the central metal and acetylacetonate with aluminum as the central metal.

The epoxy group-containing compound refers to a compound containing at least one epoxy group per molecule. The number of epoxy group contained in the epoxy group-containing polymerizable compound is, for example, one or two or more - such as 2 to 4 - per molecule. The functional groups that are contained along with the epoxy group in the epoxy group-containing compound are not specifically limited. Examples of functional groups are groups with reactivity (reactive groups) such as hydrolysable groups such as alkoxy groups, and polymerizable groups other than epoxy groups in the form of methacrylic groups and acrylic groups. The epoxy group-containing compound can be a multifunctional compound containing two or more reactive groups. Specific embodiments of multifunctional compounds are compounds having one or more epoxy groups and one or more hydrolysable groups; compounds having one or more epoxy groups and one or more polymerizable groups other than epoxy groups; and compounds having one or more of each of epoxy groups, hydrolysable groups, and polymerizable groups other than epoxy groups. The proportion of the total weight of the coating composition accounted for by the epoxy group-containing polymerizable compound is, for example, greater than or equal to 15 mass%, desirably greater than or equal to 19 mass%. It is, for example, less than or equal to 25 mass%, desirably less than or equal to 23 mass%.

Specific examples of epoxy-containing compounds - which are not to be construed as a limitation - are: 1,6-hexanediol diglycidyl ether, ethylene glycol diglycidyl ether, diethylene glycol diglycidyl ether, triethylene glycol diglycidyl ether, tetraethylene glycol diglycidyl ether, nonaethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, neopentyl glycol diglycidyl ether, diglycidyl ether of neopentyl glycol hydroxypivalic acid ester, trimethylol propane diglycidyl ether, trimethylol propane triglycidyl ether, glycerol diglycidyl ether, glycerol triglycidyl ether, diglycerol diglycidyl ether, diglycerol triglycidyl ether, diglycerol tetraglycidyl ether, pentaerythritol triglycidyl ether, pentaerythritol tetraglycidyl ether, dipentaerythritol tetraglycidyl ether, sorbitol tetraglycidyl ether, triglycidyl ether of tris(2-hydroxyethyl)isocyanate, and other aliphatic epoxy compounds; isophoronediol diglycidyl ether, bis-2,2-hydroxycyclohexyl propane diglycidyl ether, and other alicyclic epoxy compounds; resorcinol diglycidyl ether, bisphenol A diglycidyl ether, bisphenol F diglycidyl ether, bisphenol S diglycidyl ether, orthophthalic acid diglycidyl ether, phenol novolac polyglycidyl ether, cresol novolac polyglycidyl ether, and other aromatic epoxy compounds; and epoxy group-containing organic silicon compounds.

Specific examples of epoxy group-containing organic silicon compounds are epoxy group-containing silane compounds. Those epoxy-group containing silane compounds that are commonly employed as silane coupling agents are examples. Specific examples of silane coupling agents that contain epoxy groups are: 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and polymeric multifunctional epoxysilane coupling agents (product names "X-12-981" and "X-12-984" made by Shin-Etsu Chemical Co., Ltd.).

Any one epoxy group-containing compound, or a mixture of two or more such compounds, can be employed as component A.

Component B comprises acetylacetonate with iron (Fe) as the central metal (component B1 will sometimes be referred to hereinafter as iron acetylacetonate) and acetylacetonate with aluminum (Al) as the central metal (component B2 will sometimes be referred to as aluminum acetylacetonate hereinafter). These are acetylacetonate complexes. Iron acetylacetonate is synonymous with iron (III) acetylacetonate, tris(2,4-pentanedionato) iron (III), and the like. Aluminum acetylacetonate is synonymous with aluminum (III) acetylacetonate, tris(2,4-pentanedionato)aluminum (IIII), and the like.

Coating composition Hc desirably contains component C below:

Component C: fine metal oxide particles 1 to 200 nm in average particle diameter.

Specific examples of fine metal oxide particles are $SiO_2$, SiO, $ZrO_2$, $TiO_2$, TiO, $Ti_2O_3$, $Ti_2O_5$, $Al_2O_3$, $Ta_2O_5$, $CeO_2$, MgO, $Y_2O_3$, $SnO_2$, $MgF_2$, and $WO_3$. These inorganic compounds can be employed singly or in mixtures of two or more. These fine metal oxide particles serve as a sort of fillers and can be bound by compound A, which serves as a sort of matrix.

Coating composition Hc can further contain either one, or both, of components D and E below:

Component D: hydrolysis catalyst
Component E: surfactant.

Hydrochloric acid is an example of a hydrolysis catalyst. Silicone surfactants are examples of surfactants. However, there is no limitation to these compounds. Coating composition Hc can also contain antistatic agents, UV-absorbing agents, and oxidation inhibitors. As needed, coating composition Hc can be diluted with a solvent for use. Examples of the solvent are alcohols, esters, ketones, ethers, and aromatic solvents.

(Example 1)

Preparation of hard coat liquid

Below, hard coat layer coating composition Hc was varied, a number of lens samples were manufactured, and their performance was confirmed.

In the present example, epoxy group-containing component A in the form of 46 mass parts of an epoxy group-containing silane coupling agent in the form of 3-glycidoxypropyl trimethoxysilane (product name: TSL8350, made by Momentive Performance Materials Japan, LLC) and hydrolysis catalyst component D in the form of 42 mass parts of 0.05 N HCl were charged to a stainless steel vessel and thoroughly stirred.

Next, 85 mass parts of the fine metal oxide particles of component C in the form of an $SiO_2$ sol (product name: ST-S; made by Nissan Chemical Industries, Ltd.; solid fraction: 20.5%) were added to achieve a filler F (component C) to matrix M (component A) weight ratio (F/M) of 35/65.

Further, 300 ppm of the surfactant of component E in the form of a silicone surfactant (product name: L7604;

made by Toray Dow Corning Co., Ltd.), 0.217 mass part of component B in the form of component B1 iron (III) acetylacetonate (tris(2,4-pentanedionato) iron (III)), and 0.200 mass part of component B2 aluminum (III) acetylacetonate (tris(2,4-pentadionato)aluminum (III)) were added and the mixture was thoroughly stirred. Methanol was then admixed and stirred to achieve a solid fraction of 25%, yielding coating composition (hard coat liquid) Hc.

The number of moles of component B1 iron (III) acetylacetonate when the number of moles of epoxy group in the 3-glycidoxypropyl trimethoxysilane of component A was one mole in coating composition Hc, that is, the ratio mF (molar ratio) of the number of moles of component B1 to the number of moles of epoxy group in component A, was 0.0032, and the molar ratio mA of component B2 aluminum (III) acetylacetonate was 0.0032.

Manufacturing of lens sample E1

A lens substrate 2 was prepared in the form of SLU (Seiko Lucious, made by Seiko Optical Products Co., Ltd., refractive index 1.60, "Lucious" being a registered trademark in Japan). A polyurethane resin (product name: SF410; made by Dai-ichi Kogyo Seiyaku Co., Ltd.) solution with a 7% solid fraction was coated on the two surfaces 2a and 2b of lens substrate 2 by spin coating. The coatings obtained were dried for 20 minutes at 80°C to form primer films 3 that were 500 nm in thickness.

The coating composition Hc set forth above was coated over primer layers 3 on the two surfaces 2a and 2b with an ultrasonic spray coating system (product name: EXACTACOAT; made by SONO-TEK Corp.). The coatings obtained were baked for 5 hours at 125°C to form hard coat layers 10 that were 10 $\mu$m in thickness. In the present invention, the baking temperature refers to the temperature of the atmosphere in which the baking was conducted.

Inorganic antireflective layers 5 were formed with a vacuum vapor deposition device over hard coat layers 10 on the two surfaces 2a and 2b. Antireflective layers 5 were comprised of a first layer in the form of 199.00 nm of $SiO_2$, a second layer in the form of 32.32 nm of $ZrO_2$, a third layer in the form of 20.26 nm of $SiO_2$, a fourth layer in the form of 48.10 nm of $ZrO_2$, a fifth layer in the form of 6.00 nm of ITO, and a sixth layer in the form of 98.00 nm of $SiO_2$.

After forming antireflective layers 5, antifouling layers 6 were formed in a separate vacuum chamber connected to the same vapor deposition device.

The fluorine-containing organic silicon compound represented by formula (12) (KY-130, made by Shin-Etsu Chemical Co., Ltd.) was diluted with a fluorine solvent (Novec HFE-7200, made by Sumitomo 3M Co., Ltd., "Novec" being a registered trademark in Japan) to prepare a solution with a solid fraction concentration of 3 mass%. A 1 g quantity of this solution was impregnated into a porous ceramic pellet and dried to serve as a vapor deposition source.

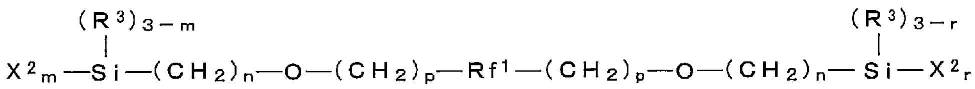

···(12)

(In the formula, $Rf^1$ denotes a divalent group having an unbranched linear perfluoropolyalkylene ether structure and containing a unit represented by the formula-$(C_kF_{2k})$O- (wherein k denotes an integer of 1 to 6); $R^3$ denotes a monovalent hydrocarbon group with 1 to 8 carbon atoms; $X^2$ denotes a hydrolysable group or a hydrogen atom; p denotes 0, 1, or 2; n denotes an integer falling within the range of 1 to 5; and each of m and r denotes 2 or 3.)

The above vapor deposition source was set in a chamber. Next, a halogen lamp was used as a heater to heat the pellet of the vapor deposition source to 600°C and vaporize the fluorine-containing organic silicon compound. A vapor deposition period of 3 minutes was employed to form an antifouling layer 6 on the surface of antireflective layer 5.

After forming the antifouling layer on one surface, lens sample 1 was removed from the chamber, the lens sample was flipped over, and the same processing as above was repeated to form antireflective layers 5 and antifouling layers 6 on each of the two surfaces 2a and 2b of lens substrate 2.

(Example 2)

With the exception that 0.399 mass part (molar ratio mA of 0.0063) of the aluminum (III) acetylacetonate of component B2 was employed, a coating composition Hc was prepared in the same manner as in Example 1. Accordingly, the molar ratio mF of component B1 and the molar ratio mA of component B2 of coating composition Hc in Example 2 were as follows:

mF: 0.0032
mA: 0.0063.

With the exception that coating composition Hc prepared as set forth above was employed, lens sample E2 was manufactured in the same manner as in Example 1.

(Example 3)

With the exception that 0.599 mass part (molar ratio mA of 0.0095) of the aluminum (III) acetylacetonate of component B2 was employed, a coating composition Hc was prepared in the same manner as in Example 1. Accordingly, the molar ratio mF of component B1 and the molar ratio mA of component B2 of coating composition Hc in Example 3 were as follows:

mF: 0.0032

mA: 0.0095.

With the exception that coating composition Hc prepared as set forth above was employed, lens sample E3 was manufactured in the same manner as in Example 1.

(Example 4)

With the exception that 0.799 mass part (molar ratio mA of 0.0126) of the aluminum (III) acetylacetonate of component B2 was employed, a coating composition Hc was prepared in the same manner as in Example 1. Accordingly, the molar ratio mF of component B1 and the molar ratio mA of component B2 of coating composition Hc in Example 4 were as follows:

mF: 0.0032
mA: 0.0126.

With the exception that coating composition Hc prepared as set forth above was employed, lens sample E4 was manufactured in the same manner as in Example 1.

(Example 5)

With the exception that 0.998 mass part (molar ratio mA of 0.0158) of the aluminum (III) acetylacetonate of component B2 was employed, a coating composition Hc was prepared in the same manner as in Example 1. Accordingly, the molar ratio mF of component B1 and the molar ratio mA of component B2 of coating composition Hc in Example 5 were as follows:

mF: 0.0032
mA: 0.0158.

With the exception that coating composition Hc prepared as set forth above was employed, lens sample E5 was manufactured in the same manner as in Example 1.

(Example 6)

With the exception that 1.198 mass parts (molar ratio mA of 0.0189) of the aluminum (III) acetylacetonate of component B2 was employed, a coating composition Hc was prepared in the same manner as in Example 1. Accordingly, the molar ratio mF of component B1 and the molar ratio mA of component B2 of coating composition Hc in Example 6 were as follows:

mF: 0.0032

mA: 0.0189

With the exception that coating composition Hc prepared as set forth above was employed, lens sample E6 was manufactured in the same manner as in Example 1.

(Example 7)

With the exception that 1.398 mass parts (molar ratio mA of 0.0221) of the aluminum (III) acetylacetonate of component B2 was employed, a coating composition Hc was prepared in the same manner as in Example 1. Accordingly, the molar ratio mF of component B1 and the molar ratio mA of component B2 of coating composition Hc in Example 7 were as follows:

mF: 0.0032
mA: 0.0221

With the exception that coating composition Hc prepared as set forth above was employed, lens sample E7 was manufactured in the same manner as in Example 1.

(Example 8)

With the exceptions that 0.065 mass part (molar ratio mF of 0.0009) of the iron (III) acetylacetonate of component B1 and 0.799 mass part (molar ratio mA of 0.0126) of the aluminum (III) acetylacetonate of component B2 were employed, a coating composition Hc was prepared in the same manner as in Example 1. Accordingly, the molar ratio mF of component B1 and the molar ratio mA of component B2 of coating composition Hc in Example 8 were as follows:

mF: 0.0009
mA: 0.0126

With the exception that coating composition Hc prepared as set forth above was employed, lens sample E8 was manufactured in the same manner as in Example 1.

(Example 9)

With the exceptions that 0.109 mass part (molar ratio mF of 0.0016) of the iron (III) acetylacetonate of component B1 and 0.799 mass part (molar ratio mA of 0.0126) of the aluminum (III) acetylacetonate of component B2 were employed, a coating composition Hc was prepared in the same manner as in Example 1. Accordingly, the molar ratio mF of component B1 and the molar ratio mA of component B2 of coating composition Hc in Example 9 were as follows:

mF: 0.0016
mA: 0.0126

With the exception that coating composition Hc prepared as set forth above was employed, lens sample E9 was manufactured in the same manner as in Example 1.

(Example 10)

With the exception that 0.152 mass part (molar ratio mF of 0.0022) of the iron (III) acetylacetonate of component B1 and 0.799 mass part (molar ratio mA of 0.0126) of the aluminum (III) acetylacetonate of component B2 were employed, a coating composition Hc was prepared in the same manner as in Example 1. Accordingly, the molar ratio mF of component B1 and the molar ratio mA of component B2 of coating composition Hc in Example 10 were as follows:

mF: 0.0022
mA: 0.0126

With the exception that coating composition Hc prepared as set forth above was employed, lens sample E10 was manufactured in the same manner as in Example 1.

(Comparative Example 1)

With the exception that no component B2 in the form of aluminum (III) acetylacetonate was added, a coating composition Hc was prepared in the same manner as in Example 1. Accordingly, the molar ratio mF of component B1 and the molar ratio mA of component B2 of coating composition Hc in Comparative Example 1 were as follows:

mF: 0.0032
mA: 0.0000

With the exception that coating composition Hc prepared as set forth above was employed, lens sample R1 was manufactured in the same manner as in Example 1.

(Comparative Example 2)

With the exception that 1.997 mass parts (molar ratio mA of 0.0316) of component B2 in the form of aluminum (III) acetylacetonate was added, a coating composition Hc was prepared in the same manner as in Example 1. Accordingly, the molar ratio mF of component B1 and the molar ratio mA of component B2 of coating composition Hc in Comparative Example 2 were as follows:

mF: 0.0032
mA: 0.0316

With the exception that coating composition Hc prepared as set forth above was employed, lens sample R2 was manufactured in the same manner as in Example 1.

(Comparative Example 3)

With the exception that 0.799 mass part (molar ratio mA of 0.0126) of component B2 in the form of aluminum (III) acetylacetonate was added without adding the iron (III) acetylacetonate of component B1, a coating composition Hc was prepared in the same manner as in Example 1. Accordingly, the molar ratio mF of component B1 and the molar ratio mA of component B2 of coating composition Hc in Comparative Example 3 were as follows:

mF: 0.0000

mA: 0.0126

With the exception that coating composition Hc prepared as set forth above was employed, lens sample R3 was manufactured in the same manner as in Example 1.

Evaluation

The scratch resistance and yellowing of the lens samples obtained in Examples 1 to 10 and Comparative Examples 1 to 3 above were evaluated. The scratch resistance was evaluated by two tests: the steel wool test (SW test) and the Bayer test.

Steel wool (SW) scratch resistance test

While applying a load of 1 kg, steel wool (#0000, made by Nihon Steel Wool Co., Ltd.) was rubbed back and forth 10 times over the surface of the lens. Evaluation was conducted by visually determining the closest grade among specimen ranking samples (10 grades). The larger the value, the better the scratch resistance indicated. The evaluation scale was as follows.

Good "◎": A score of greater than or equal to 5.2
Passing "○": A score of greater than or equal to 3.5 but less than 5.2
Failing "X": A score of less than 3.5

Bayer scratch resistance test

The tendency of the lens surface to scratch was measured with a Bayer tester (BTE Abrasion Tester) made by COLTS Laboratories. Each of the lens samples fabricated as set forth above and a reference lens CR39 (made by SUN-LUX Co., Ltd., optical power 0 diopters, made of uncoated allyl diglycol carbonate) were set in the tester and 500 g of Bayer medium (abrasive, made by COLTS Laboratories, 50 pound Bayer medium) was charged. Six hundred shake cycles were performed at a rate of 150 cycles/minute, the lens sample and reference lens CR39 were removed, and the haze value was measured. An automated haze computer (made by Suga Test Instruments Co., Ltd.) was used to

measure the haze value. Once the haze value had been measured, the following equation was used to calculate the value (Bayer Ratio) R of the Bayer test.

$$R = |H_{CRO} - H_{CR1}| / | H_{SO} - H_{S1}|$$

In the above, $H_{CRO}$ denotes the haze value of the reference lens CR39 before the test. $H_{CR1}$ denotes the haze value of the reference lens CR39 after the test. $H_{SO}$ denotes the haze value of the lens sample before the test. And $H_{S1}$ denotes the haze value of the lens sample after the test. The evaluation standard was as follows. A haze test value of about 7 permitted good use in practical terms as an eyeglass lens. The present evaluation was conducted based on a stringent evaluation standard because better scratch resistance was achieved.

Good "◎": Value (Bayer Ratio) R of the Bayer test of greater than or equal to 39

Passing "○": R of greater than or equal to 30 but less than 39

Failing "X": less than 30

Evaluation of yellowing

A rapid integration sphere-type spectral transmittance measurement instrument (product name: Dot 3; made by Murakami Color Research Laboratory) was employed in accordance with Japanese Industrial Standard JIS K7373 "Methods of Determining the Degree of Yellow and the Degree of Yellowing in Plastics" to determine the degree of yellow (YI value) of each lens sample. The YI value is a relative evaluation of the potential for change in a lens substrate or the like. The effect of the coating composition Hc was determined by using lens samples in which only the coating composition Hc that was formed on hard coat layer 10 was varied in the above Examples and Comparative Examples.

Specifically, the auxiliary illuminant C of the tristimulus value obtained with the rapid integration sphere-type spectral transmittance measurement instrument was used to calculate the YI value in an XYZ color system from the following equation:

$$YI = 100 \times (1.2769 \times X - 1.0592 \times Z)/Y.$$

The higher the YI value, the greater the suppression of yellowing indicated. The evaluation scale was as follows:

Good "◎": YI value of less than 4.2
Passing "○": YI value of greater than or equal to 4.2 but less than 4.5
Failing "X": YI value of greater than or equal to 4.5

(Evaluation results)

Figure 2 presents the results of the steel wool test, Bayer test, and yellowing evaluation conducted for the various lens samples of Examples 1 to 10 and Comparative Examples 1 to 3. Figure 2 also gives the molar ratio mF of the iron acetylacetonate of component B1 and the molar ratio mA of the aluminum acetylacetonate of component B2 contained in the coating compositions Hc employed in the various lens samples; the ratio of molar ratio mF to molar ratio mA (mF/mA); the sum of molar ratio mF and molar ratio mA (mF + mA); overall evaluation of the resistance to scratching; and the results of the overall evaluation of resistance to scratching and yellowing. The overall evaluation is as follows:

Good "◎": All test evaluations good
Passing "○": Passed all test evaluations with no failure.
Failing "X": Failed one more test evaluations

Figure 3 shows the evaluation of the steel wool test for the ratio (mF/mA) and the sum (mF+mA). Figure 4 shows the Bayer test evaluation for the ratio (mF/mA) and the sum (mF+mA). Figure 5 shows the overall evaluation of the scratch resistance for the ratio (mF/mA) and the sum (mF+mA). Figure 6 shows the yellowing evaluation for the ratio

(mF/mA) and the sum (mF+mA). And Figure 7 shows the overall evaluation for the ratio (mF/mA) and the sum (mF+mA).

Based on evaluation of the scratching property of Comparative Examples R1 and R3, the use of a catalyst comprising both component B1 in the form of iron acetylacetonate and component B2 in the form of aluminum acetylacetonate as component B in the course of preparing coating composition Hc was found to permit the manufacturing of a lens of high scratch resistance. In particular, having a molar ratio mF of component B1 that was less than or equal to the molar ratio mA of component B2 was found to be desirable in manufacturing a lens of high scratch resistance. Accordingly, the molar ratio mF of the iron acetylacetonate of component B1 and the molar ratio mA of the aluminum acetylacetonate of component B2 were desirably found to satisfy the condition of relation (1) below:

$$0.000 < mF/mA \leq 1.000 \quad \ldots (1).$$

The use of a coating composition Hc that satisfied condition (1) was found to yield high performance lens samples with a surface scratch resistance of greater than or equal to 30, more specifically greater than or equal to 35, as a Bayer test value (Bayer ratio).

Based on the evaluation of yellowing in Comparative Example 2, having the sum of the iron acetylacetonate of component B1 and the aluminum acetylacetonate of component B2 as component B be less than or equal to 0.0253 per mole of epoxy group in the preparation of coating composition Hc was found to reduce yellowing of the lens without sacrificing scratch resistance. Accordingly, the molar ratio mF of the iron acetylacetonate of component B1 and the molar ratio mA of the aluminum acetylacetonate of component B2 were desirably found to satisfy the condition of relation (2) below. This was amply achieved by being greater than or equal to the lower limit of relation (2):

$$0.0064 \leq (mF+mA) \leq 0.0253 \quad \ldots (2).$$

In addition to the above conditions, when focusing on the molar ratio mF of the iron acetylacetonate of component B1 and the molar ratio mA of the aluminum acetylacetonate of component B2, based on Figure 2, when the molar ratio Fm of component B1 and the molar ratio mA of component B2 as components B satisfied the conditions of relations (3) and (4) below during the preparation of coating composition Hc, it was possible to manufacture a lens of high scratch resistance and little yellowing:

$$0.0009 \leq mF \leq 0.0032 \quad \ldots (3)$$

$$0.0032 \leq mA \leq 0.0221 \quad \ldots (4).$$

Further, when focusing on yellowing evaluation and the molar ratio Fm of the iron acetylacetonate of component B1 and the molar ratio mA of the aluminum acetylacetonate of component B2 as component B satisfies the condition of relation (5) below in the course of preparing coating composition Hc, it was possible to provide a lens sample with little coloration and in which the YI value was less than or equal to 4.1.

$$0.0064 \leq (mF+mA) \leq 0.0190 \quad \ldots (5).$$

On the other hand, when focusing on the value of the Bayer test and the molar ratio Fm of component B1 and the molar ratio mA of component B2 as component B satisfied the condition of relation (6') below in the course of preparing coating composition Hc, it was possible to provide a lens sample with a high scratch resistance performance in the form of a Bayer test value of greater than or equal to 39:

$$0.1270 \leq mF/mA \leq 1.0000 \quad \ldots (6').$$

When focusing on the overall evaluation of scratch resistance and the molar ratio Fm of component B1 and the molar ratio mA of component B2 satisfied the condition of relation (6) below as c in the course of preparing coating composition Hc, it is possible to provide a lens sample with extremely high scratch resistance performance in the form of a Bayer test value of greater than or equal to 39 and a steel wool test value of greater than or equal to 5.2:

$$0.1448 \leq mF/mA \leq 0.3368 \ ... (6).$$

Accordingly, when the molar ratio Fm of component B1 and the molar ratio mA of component B2 satisfied the condition of relation (7) below as component B in the course of preparing coating composition Hc, it was possible to provide a lens sample with extremely high scratch resistance performance in the form of a Bayer test value of greater than or equal to 39, a steel wool test value of greater than or equal to 5.2, and little coloration as indicated by a YI value of less than or equal to 4.2:

$$0.1746 \leq mF/mA \leq 0.3368 \ ... (7).$$

One factor in obtaining results such as the above is that by having the molar ratio Fm of component B1 and the molar ratio mA of component B2 as component B fall within the above range of mF/mA, it is presumed that both the aluminum acetylacetonate of highly reactive component B2 and the iron acetylacetonate of component B1 of low reactivity are able to contribute to the ring-opening reaction of the epoxy group. Thus, polymerization of the epoxy group-containing compound and its hydrolysates by component B is promoted and it becomes possible to form a highly dense hard coat layer 10, which is thought to enhance scratch resistance. Additionally, when the quantity of aluminum acetylacetonate of component B2 that is added is excessive, the iron acetylacetonate of component B1 is picked up in the film without reacting, and aluminum acetylacetonate that does not contribute to the reaction is also thought to be picked up in the film. Thus, the denseness decreases and the scratch resistance decreases, which are presumed to result in prominent yellowing.

Examples given above are merely examples. Primer layer 3 and hard coat layer 10 can be manufactured by various methods such as the spin coating, dipping, spray coating, roll coating, and flow coating methods. The above baking times and temperatures are also merely examples. The hard coat layer can be baked for several hours (for example, 1 to 5 hours) at a temperature falling within a range of 100°C to 150°C and by heated drying.

According to an aspect of the present invention, the thickness of the coating formed of the coating composition is greater than or equal to 5 μm, for example, or exceeds 5 μm, for example. The thickness of the coating is, for example, less than or equal to 20 μm.

The thicker the coating, the greater the tendency for coloration of the optical article to occur due to the presence of the coating. By contrast, in one aspect of the present invention, for example, it is possible to provide an optical article with little coloration in an optical article having a relatively thick coating falling within the above range, for example.

Coating composition Hc can be coated on the surface of various optical articles, such as eyeglass lenses, camera lenses, optical beam converging lenses, and liquid-crystal displays, and scratch resistance can be enhanced while inhibiting discoloration. According to an aspect of the present invention, the coating composition is desirably employed as a coating composition for eyeglass lenses. According to an aspect of the present invention, the optical article is desirably an eyeglass lens.

Explanation of symbols

1 Eyeglass lens, 2 Lens substrate, 10 Hard coat layer

## Claims

**1.** A coating composition, which comprises:

an epoxy group-containing compound,
acetylacetonate with iron as a central metal, and
acetylacetonate with aluminum as a central metal, wherein
the ratio mF of the number of moles of the acetylacetonate with iron as a central metal to the number of moles of epoxy group contained in the epoxy group-containing compound, and the ratio mA of the number of moles of the acetylacetonate with aluminum as a central metal to the number of moles of epoxy group contained in the epoxy group-containing compound satisfy the following conditions:

$$0.000 < mF/mA \leq 1.000$$

$$0.0064 \leq (mF+mA) \leq 0.0253.$$

2. The coating composition according to claim 1, which is a coating composition for an eyeglass lens.

3. The coating composition according to claim 1 or 2, wherein the ratio mF and the ratio mA satisfy the following conditions:

$$0.0009 \leq mF \leq 0.0032$$

$$0.0032 \leq mA \leq 0.0221.$$

4. The coating composition according to any of claims 1 to 3, wherein the ratio mF and the ratio mA satisfy the following condition:

$$0.0064 \leq (mF+mA) \leq 0.0190.$$

5. The coating composition according to any of claims 1 to 3, wherein the ratio mF and the ratio mA satisfy the following condition:

$$0.1448 \leq mF/mA \leq 0.3368.$$

6. The coating composition according to any of claims 1 to 3, wherein the ratio mF and the ratio mA satisfy the following condition:

$$0.1746 \leq mF/mA \leq 0.3368.$$

7. The coating composition according to any of claims 1 to 6, wherein the epoxy-containing compound comprises an epoxy group-containing organic silicon compound.

8. A method of manufacturing an optical article, which comprises:

   coating the coating composition according to any of claims 1 to 7 directly, or over another layer(s), on an optical substrate; and
   baking the optical substrate on which the coating composition has been coated at a temperature ranging from 100°C to 150°C.

9. The method of manufacturing an optical article according to claim 8, wherein the optical article is an eyeglass lens.

Fig. 1

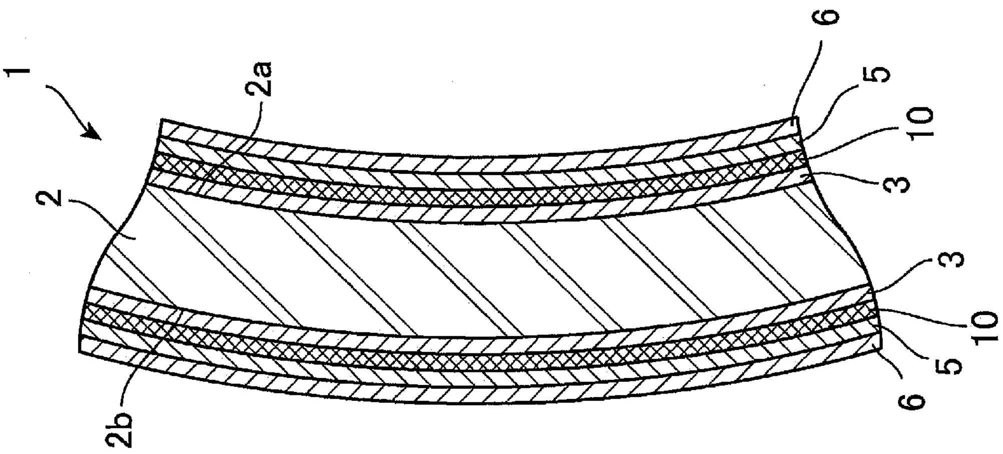

Fig. 2

| Sample | Molar ratio to the number of moles of epoxy group | | mF/mA | mF+mA | Scratch resistance | | | | | Yellowing | | Overall Eval. |
|---|---|---|---|---|---|---|---|---|---|---|---|---|
| | | | | | SW | | Bayer | | Overall Eval. | YI | | |
| | Fe(III) acetylacetonate mF | Al(III) acetylacetonate mA | | | Grade value | Eval. | R value | Eval. | | YI value | Eval. | |
| E 1 | 0.0032 | 0.0032 | 1.0000 | 0.0064 | 4.6 | ○ | 53.0 | ◎ | ○ | 3.0 | ◎ | ○ |
| E 2 | 0.0032 | 0.0063 | 0.5079 | 0.0095 | 4.8 | ○ | 53.0 | ◎ | ○ | 3.5 | ◎ | ○ |
| E 3 | 0.0032 | 0.0095 | 0.3368 | 0.0127 | 5.3 | ◎ | 52.5 | ◎ | ◎ | 3.5 | ◎ | ◎ |
| E 4 | 0.0032 | 0.0126 | 0.2540 | 0.0158 | 5.6 | ◎ | 50.0 | ◎ | ◎ | 3.9 | ◎ | ◎ |
| E 5 | 0.0032 | 0.0158 | 0.2025 | 0.0190 | 5.4 | ◎ | 46.0 | ◎ | ◎ | 4.1 | ◎ | ◎ |
| E 6 | 0.0032 | 0.0189 | 0.1693 | 0.0221 | 5.5 | ◎ | 50.5 | ◎ | ◎ | 4.3 | ○ | ○ |
| E 7 | 0.0032 | 0.0221 | 0.1448 | 0.0253 | 5.9 | ◎ | 39.5 | ◎ | ◎ | 4.3 | ○ | ○ |
| E 8 | 0.0009 | 0.0126 | 0.0714 | 0.0135 | 5.0 | ○ | 38.0 | ○ | ○ | 3.9 | ◎ | ○ |
| E 9 | 0.0016 | 0.0126 | 0.1270 | 0.0142 | 5.1 | ○ | 45.7 | ◎ | ○ | 4.0 | ◎ | ○ |
| E 10 | 0.0022 | 0.0126 | 0.1746 | 0.0148 | 5.9 | ◎ | 39.1 | ◎ | ◎ | 4.1 | ◎ | ◎ |
| R 1 | 0.0032 | 0.0000 | ∞ | 0.0032 | 3.0 | × | 10.0 | × | × | 3.0 | ◎ | × |
| R 2 | 0.0032 | 0.0316 | 0.1013 | 0.0348 | 5.6 | ◎ | 40.0 | ◎ | ◎ | 4.6 | × | × |
| R 3 | 0.0000 | 0.0126 | 0.0000 | 0.0126 | 4.6 | ○ | 25.7 | × | × | 3.0 | ◎ | × |

Fig. 3

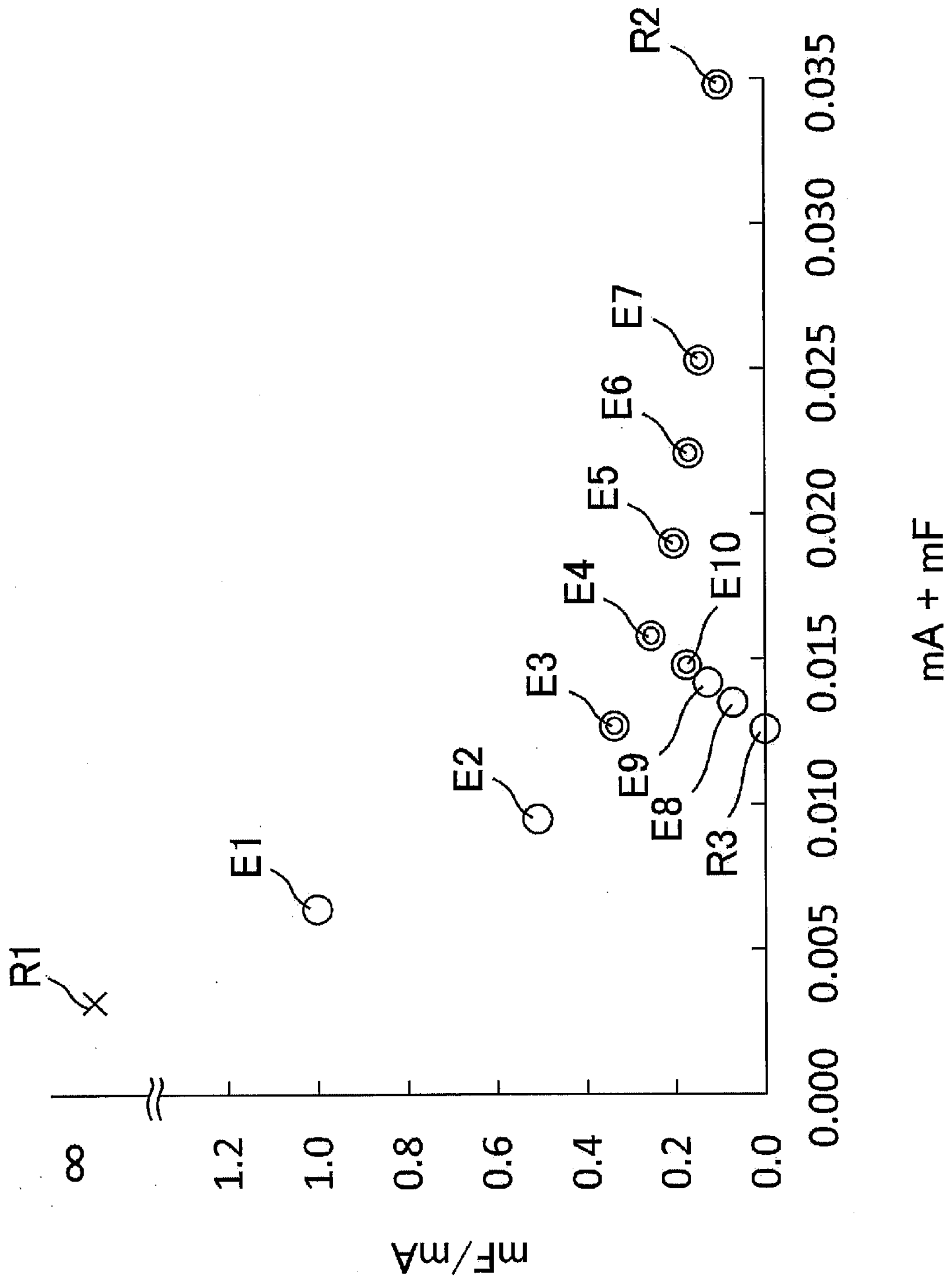
mF/mA
mA + mF
∞
1.2
1.0
0.8
0.6
0.4
0.2
0.0
0.000
0.005
0.010
0.015
0.020
0.025
0.030
0.035
R1
E1
E2
E3
E4
E5
E6
E7
E8
E9
E10
R2
R3

Fig. 4

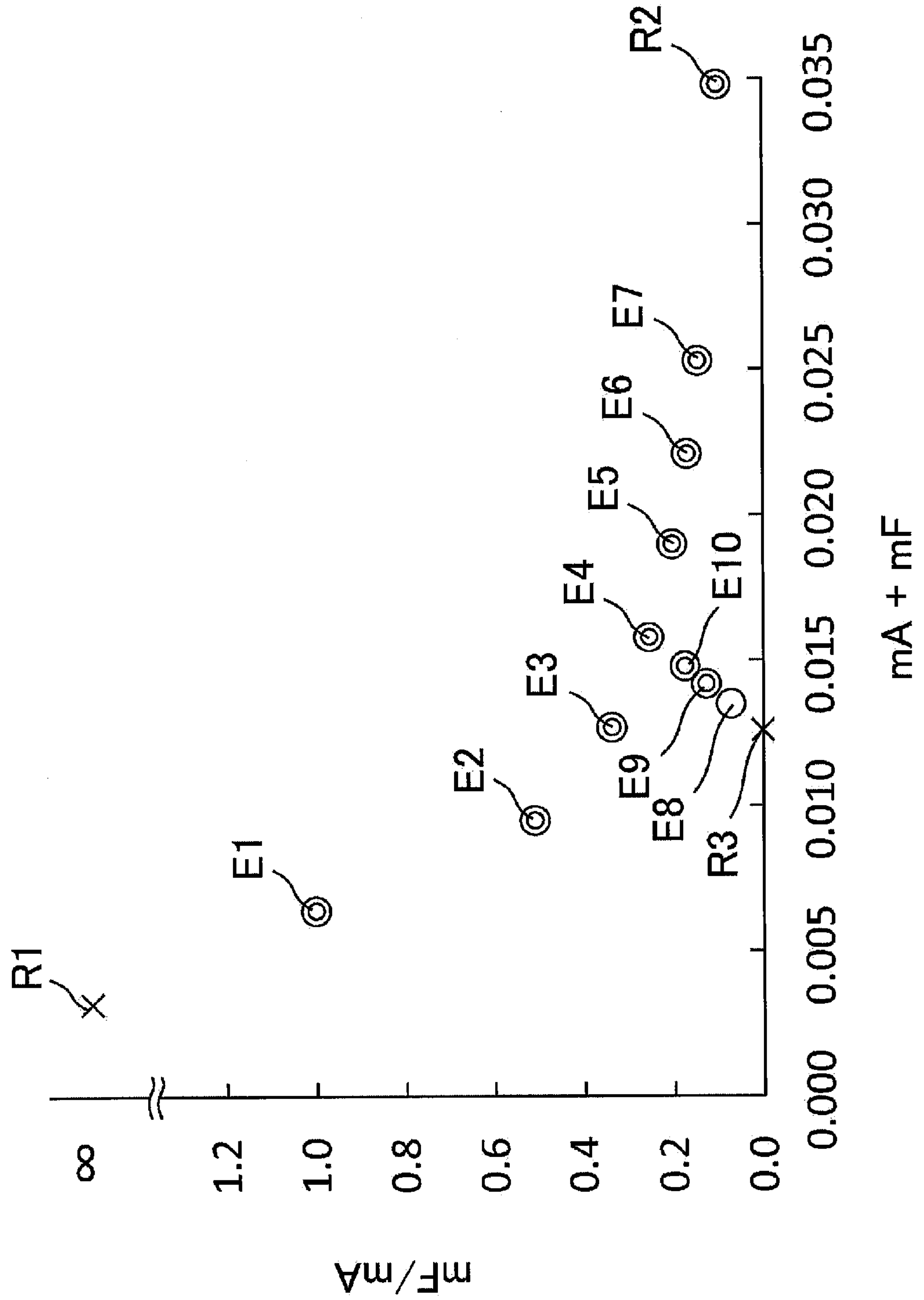
mF/mA
mA + mF
∞
1.2
1.0
0.8
0.6
0.4
0.2
0.0
0.000
0.005
0.010
0.015
0.020
0.025
0.030
0.035
R1
R2
R3
E1
E2
E3
E4
E5
E6
E7
E8
E9
E10

Fig. 5

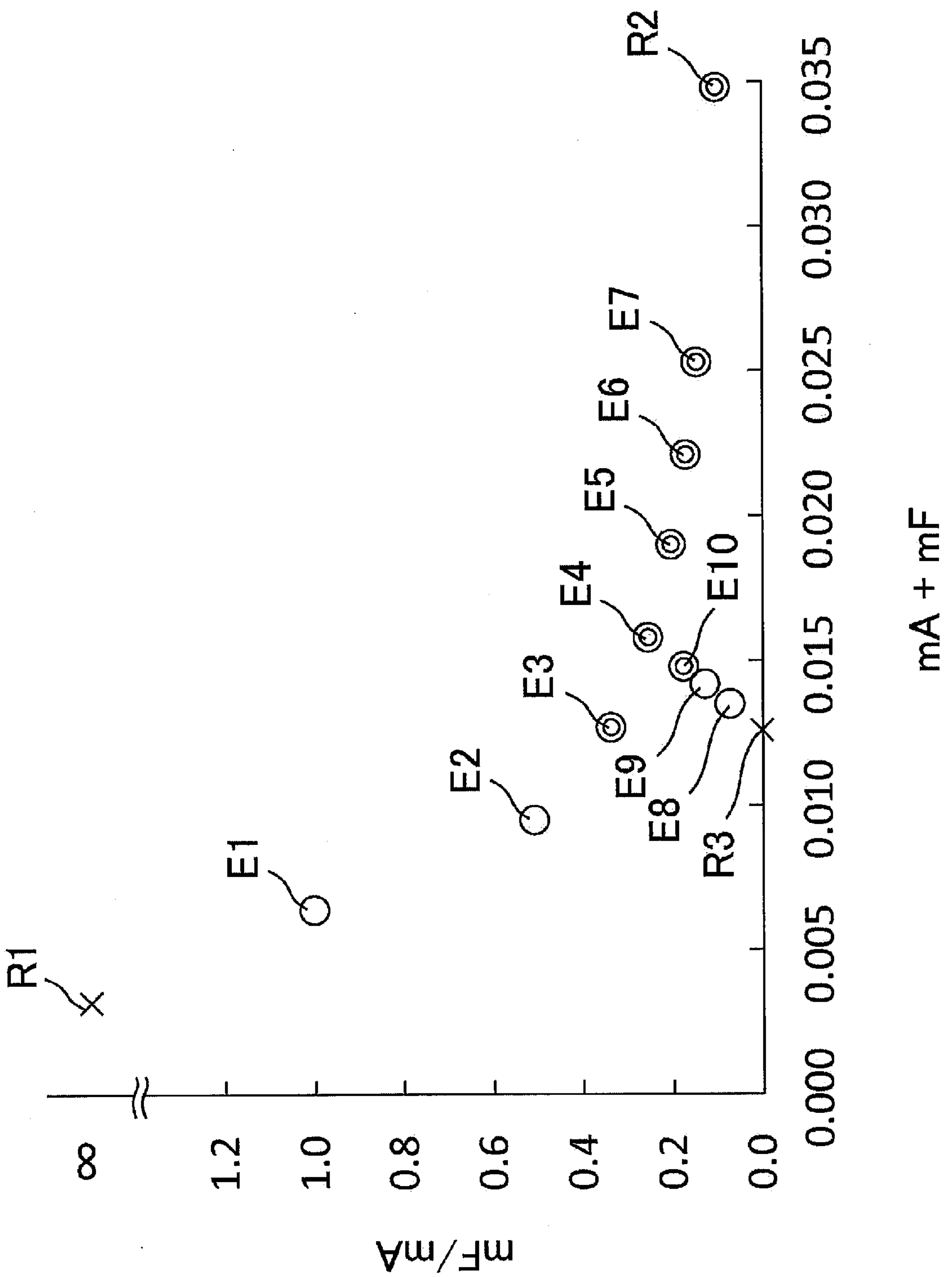
mF/mA
∞
1.2
1.0
0.8
0.6
0.4
0.2
0.0
mA + mF
0.000
0.005
0.010
0.015
0.020
0.025
0.030
0.035
R1
E1
E2
E3
E4
E5
E6
E7
E8
E9
E10
R2
R3

Fig. 6

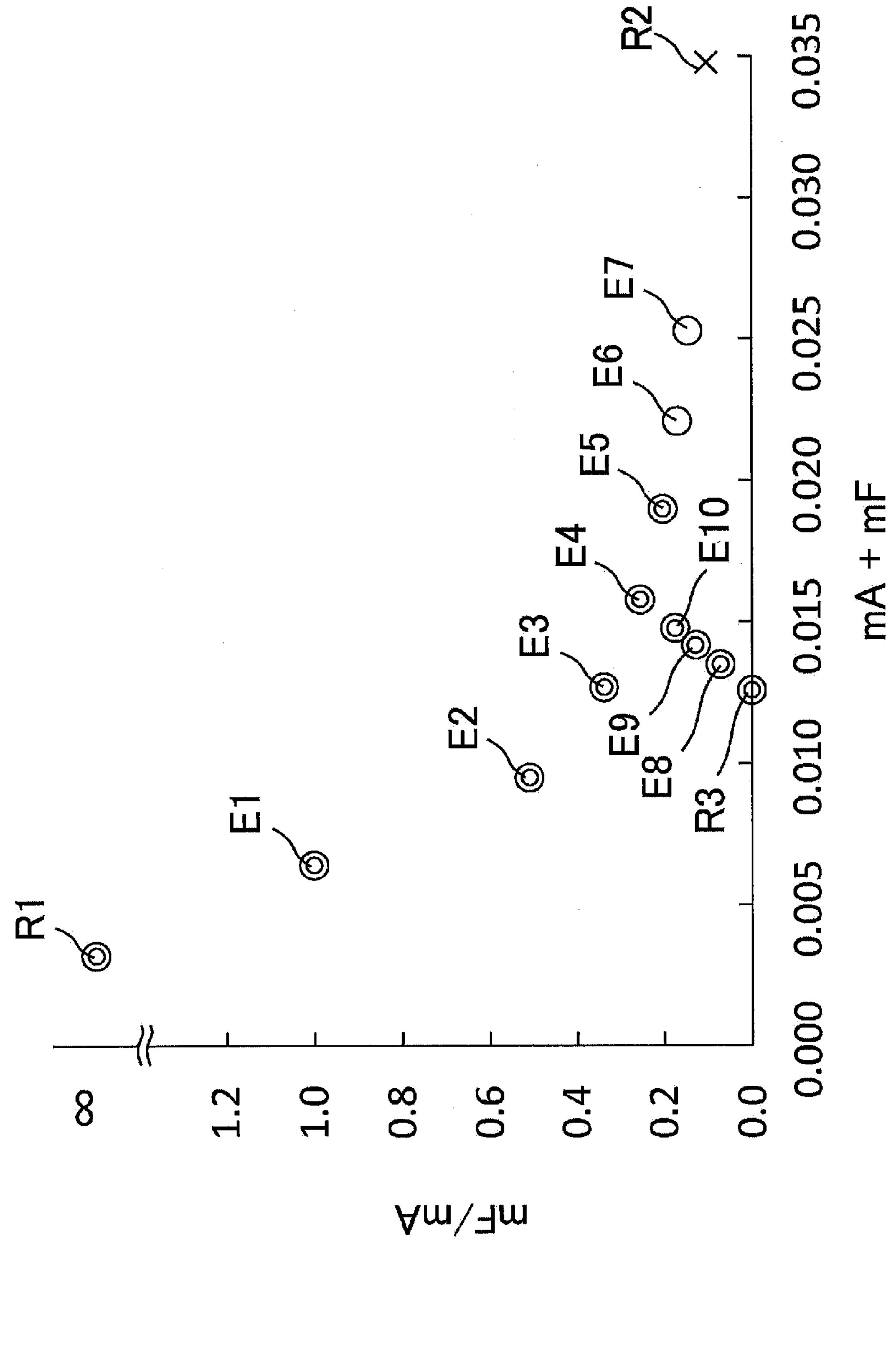
mF/mA
∞
1.2
1.0
0.8
0.6
0.4
0.2
0.0
0.000
0.005
0.010
0.015
0.020
0.025
0.030
0.035
mA + mF
R1
E1
E2
E3
E4
E5
E6
E7
E8
E9
E10
R2
R3

Fig. 7

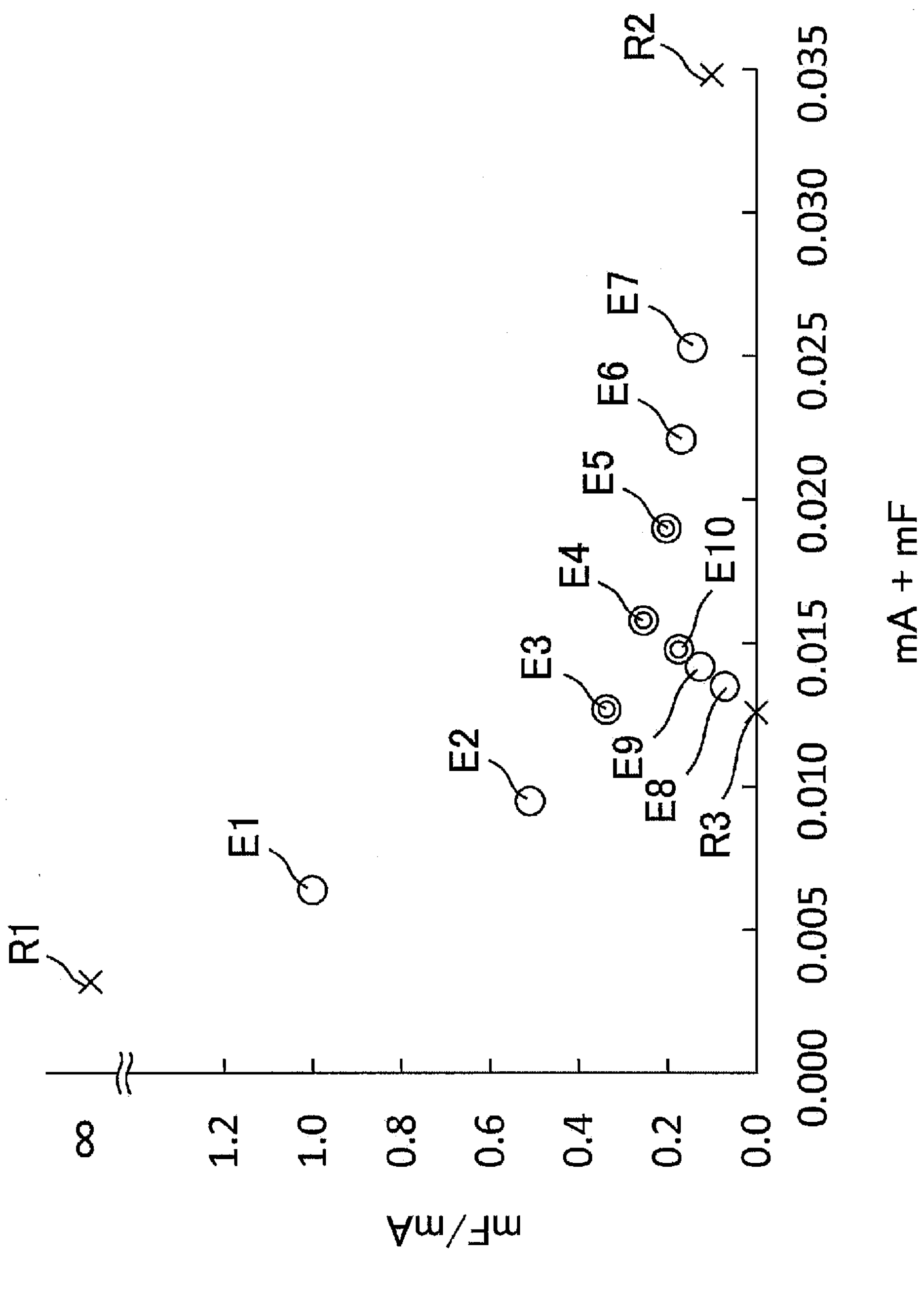
mF/mA
∞
1.2
1.0
0.8
0.6
0.4
0.2
0.0
0.000
0.005
0.010
0.015
0.020
0.025
0.030
0.035
mA + mF
R1
R2
R3
E1
E2
E3
E4
E5
E6
E7
E8
E9
E10

## INTERNATIONAL SEARCH REPORT

International application No.
PCT/JP2014/052283

A. CLASSIFICATION OF SUBJECT MATTER
*C09D163/00*(2006.01)i, *C09D7/12*(2006.01)i, *C09D183/06*(2006.01)i, *G02B1/10* (2006.01)n

According to International Patent Classification (IPC) or to both national classification and IPC

B. FIELDS SEARCHED

Minimum documentation searched (classification system followed by classification symbols)
C09D163/00, C09D7/12, C09D183/06, G02B1/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2000-281970 A (Asahi Optical Co., Ltd.), 10 October 2000 (10.10.2000), paragraphs [0003] to [0032](particularly, examples 1, 3, 4) (Family: none) | 1,3-9<br>1-9 |
| Y | JP 2005-281430 A (Seiko Epson Corp.), 13 October 2005 (13.10.2005), paragraphs [0008] to [0063](particularly, example 4) (Family: none) | 1-9 |
| Y | WO 97/041185 A1 (Seiko Epson Corp.), 06 November 1997 (06.11.1997), claims; examples & JP 2006-89749 A & US 6057039 A1 | 2-9 |

☒ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>20 March, 2014 (20.03.14) | Date of mailing of the international search report<br>01 April, 2014 (01.04.14) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2014/052283

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-101779 A (Seiko Epson Corp.), 19 April 2007 (19.04.2007), paragraphs [0007] to [0156] (Family: none) | 2-9 |
| Y | WO 2006/001354 A1 (Tokuyama Corp.), 05 January 2006 (05.01.2006), claims; examples & JP 2006-8869 A | 2-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013016573 A
- JP 2006008869 A
- JP 2004145283 A
- JP 9263728 A